(19) Europäisches Patentamt
European Patent Office
Office européen des brevets

(11) **EP 2 642 670 A1**

(12) **EUROPEAN PATENT APPLICATION**
published in accordance with Art. 153(4) EPC

(43) Date of publication:
**25.09.2013 Bulletin 2013/39**

(51) Int Cl.:
***H04B 7/04*** *(2006.01)*

(21) Application number: **11849671.0**

(22) Date of filing: **29.09.2011**

(86) International application number:
**PCT/CN2011/080366**

(87) International publication number:
**WO 2012/079407 (21.06.2012 Gazette 2012/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2010 CN 201010593602**

(71) Applicant: **Huawei Technologies Co., Ltd.
Shenzhen, Guangdong 518129 (CN)**

(72) Inventors:
• **ZHANG, Jiayin**
 **Shenzhen, Guangdong 518129 (CN)**
• **NI, Jun**
 **Shenzhen, Guangdong 518129 (CN)**
• **WANG, Yi**
 **Shenzhen, Guangdong 518129 (CN)**
• **MA, Ni**
 **Shenzhen, Guangdong 518129 (CN)**
• **LU, Jianmin**
 **Shenzhen, Guangdong 518129 (CN)**

(74) Representative: **Pfenning, Meinig & Partner GbR
Theresienhöhe 13
80339 München (DE)**

(54) **COMMUNICATION METHOD, DEVICE AND SYSTEM FOR A DISTRIBUTED ANTENNA SYSTEM**

(57) Embodiments of the present invention provide a communication method, an apparatus, and a system for a distributed antenna system, and relate to the field of communications technologies, so as to effectively improve the performance of the system. The communication method includes: receiving, by a receiving device, a measurement reference signal corresponding to an antenna cluster in a cell, where all antennas in the cell are divided into at least one antenna cluster, and each antenna cluster includes at least one antenna and has a corresponding cluster identifier; obtaining channel information corresponding to the antenna cluster according to the measurement reference signal; and transmitting the cluster identifier and the channel information corresponding to the antenna cluster to a central processing device, so that the central processing device determines the antenna cluster serving the receiving device according to the cluster identifier and the channel information corresponding to the antenna cluster. The present invention is applicable to a communication system such as an LTE system.

Receive, by a receiving device, a measurement reference signal corresponding to an antenna cluster in a cell — 101

Obtain channel information corresponding to the antenna cluster according to the measurement reference signal — 102

Transmit the cluster identifier and the channel information corresponding to the antenna cluster to a central processing device — 103

FIG. 1

EP 2 642 670 A1

**Description**

This application claims priority to Chinese Patent Application No. 201010593602.4, filed with the Chinese Patent Office on December 17, 2010 and entitled "COMMUNICATION METHOD, APPARATUS, AND SYSTEM FOR DISTRIBUTED ANTENNA SYSTEM", which is incorporated herein by reference in its entirety.

**FIELD OF THE INVENTION**

The present invention relates to the field of communications technologies, and in particular, to a communication method, an apparatus, and a system for a distributed antenna system.

**BACKGROUND OF THE INVENTION**

A distributed antenna system (DAS, Distributed Antenna System) is a network system that includes multiple antenna units (AUs, Antenna Units) and provides wireless coverage. Each AU includes one or more antennas; the AUs are deployed at a certain interval and are used to transmit the signal between a transmitting end and a receiving end.

The existing DAS is generally implemented based on a single frequency network (SFN, Single Frequency Network) (hereinafter, DAS SFN for short); that is, each AU transmits exactly the same signal, and when receiving the signal, the receiving end such as a user equipment (UE, User Equipment) does not need to distinguish which AU transmits the signal, but may consider the signals from the AUs as multipath components arriving with different delays. Compared with a conventional centralized antenna system (CAS, Centralized Antenna System), where an antenna or a base station is located in the center of a cell, the existing DAS can improve the throughput and capacity of the cell and achieve a higher spatial multiplexing gain.

However, in the existing DAS SFN, the AU is usually located in a non- central area, for example, on the edge of a cell. Therefore, for the signals with the same power, the signal attenuation of the DAS SFN on the edge of the cell is low, thereby causing a high interference to a neighboring cell. In addition, in the DAS SFN, each AU transmits exactly the same signal. However, if a UE is very close to an AU, the quality of service for the UE is guaranteed without the other AUs. In other words, the other AUs should have been used to transmit the other signals. Therefore, the multiplexing gain on the DAS SFN become low and the system capacity is reduced.

**SUMMARY OF THE INVENTION**

Embodiments of the present invention provide a communication method, an apparatus, and a system for a DAS, so as to improve the system performance.

Embodiments of the present invention employ the following technical solutions:

A communication method for a DAS, including:

receiving, by a receiving device, a measurement reference signal corresponding to an antenna cluster in a cell, where all antennas in the cell are divided into at least one antenna cluster, and each antenna cluster includes at least one antenna and has a corresponding cluster identifier;
obtaining channel information corresponding to the antenna cluster according to the measurement reference signal; and
transmitting the cluster identifier and the channel information corresponding to the antenna cluster to a central processing device, so that the central processing device determines the antenna cluster serving the receiving device according to the cluster identifier and the channel information corresponding to the antenna cluster.

A communication method for a distributed antenna system, including:

transmitting a measurement reference signal corresponding to an antenna cluster to a receiving device in a cell, where all antennas in the cell are divided into at least one antenna cluster, and each antenna cluster includes at least one antenna and has a corresponding cluster identifier;
receiving the cluster identifier and channel information corresponding to the antenna cluster transmitted by the receiving device; and
determining the antenna cluster serving the receiving device according to the cluster identifier and the channel information corresponding to the antenna cluster.

A receiving device for a distributed antenna system, including:

a receiving unit, configured to receive a measurement reference signal corresponding to an antenna cluster in a cell, where all antennas in the cell are divided into at least one antenna cluster, and each antenna cluster includes at least one antenna and has a corresponding cluster identifier;

a measurement unit, configured to obtain channel information corresponding to the antenna cluster according to the measurement reference signal; and

a transmitting unit, configured to transmit the cluster identifier and the channel information corresponding to the antenna cluster to a central processing device, so that the central processing device determines the antenna cluster serving the receiving device according to the cluster identifier and the channel information corresponding to the antenna cluster.

A central processing device for a distributed antenna system, including:

a transmitting unit, configured to transmit a measurement reference signal corresponding to an antenna cluster to a receiving device in a cell, where all antennas in the cell are divided into at least one antenna cluster, and each antenna cluster includes at least one antenna and has a corresponding cluster identifier;

a receiving unit, configured to receive the cluster identifier and channel information corresponding to the antenna cluster transmitted by the receiving device; and

a determining unit, configured to determine the antenna cluster serving the receiving device according to the cluster identifier and the channel information corresponding to the antenna cluster.

A distributed antenna system, including:

a receiving device, an antenna, and a central processing device that are located in the same cell, where all antennas in the cell are divided into at least one antenna cluster, and each antenna cluster includes at least one antenna and has a corresponding cluster identifier;

the receiving device is configured to receive a measurement reference signal corresponding to an antenna cluster in the cell, obtain channel information corresponding to the antenna cluster according to the measurement reference signal, and transmit the cluster identifier and the channel information corresponding to the antenna cluster to the central processing device; and

the central processing device is configured to transmit the measurement reference signal corresponding to an antenna cluster to the receiving device in the cell, receive the cluster identifier and the channel information corresponding to the antenna cluster transmitted by the receiving device, and determine the antenna cluster serving the receiving device according to the cluster identifier and the channel information corresponding to the antenna cluster.

When the preceding technical solutions are used, according to the communication method, the receiving device, the central processing device for a DAS, and the DAS provided in embodiments of the present invention, through antenna clustering, the antenna cluster serving the receiving device can be selected, and the selected antenna cluster is used to serve the receiving device, thereby effectively reducing interference to a neighboring cell and increasing the system capacity of the DAS. In addition, because the antenna clusters belong to the same cell, no signaling interaction at a high layer is required when the handover of the receiving device is implemented between these antenna clusters, thereby decreasing the number of handovers and reducing the handover delay. Therefore, the communication method, the receiving device, the central processing device for a DAS, and the DAS provided in embodiments of the present invention significantly improve the performance of the entire system.

## BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.

FIG. 1 is a flow chart of a communication method for a DAS according to an embodiment of the present invention;

FIG. 2 illustrates an antenna clustering method of a communication method for a DAS according to an embodiment of the present invention;

FIG. 3 illustrates an antenna clustering method of a communication method for a DAS according to an embodiment of the present invention;

FIG. 4 illustrates an antenna clustering method of a communication method for a DAS according to an embodiment of the present invention;

FIG. 5 illustrates an antenna clustering method of a communication method for a DAS according to an embodiment of the present invention;

FIG. 6 illustrates an antenna clustering method of a communication method for a DAS according to an embodiment of the present invention;

FIG. 7 is another flow chart of a communication method for a DAS according to an embodiment of the present invention;

FIG. 8 is a schematic structural diagram of a receiving device for a DAS according to an embodiment of the present invention;

FIG. 9 is another schematic structural diagram of a receiving device for a DAS according to an embodiment of the present invention;

FIG. 10 is a schematic structural diagram of a central processing device for a DAS according to an embodiment of the present invention;

FIG. 11 is another schematic structural diagram of a central processing device for a DAS according to an embodiment of the present invention;

FIG. 12 is a schematic structural diagram of a DAS according to an embodiment of the present invention;

FIG. 13 is a schematic diagram of a distributed architecture for a DAS according to an embodiment of the present invention; and

FIG. 14 is a schematic diagram of a centralized architecture for a DAS according to an embodiment of the present invention.

## DETAILED DESCRIPTION OF THE EMBODIMENTS

The technical solutions in the embodiments of the present invention are clearly and completely described below with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative effects shall fall within the protection scope of the present invention.

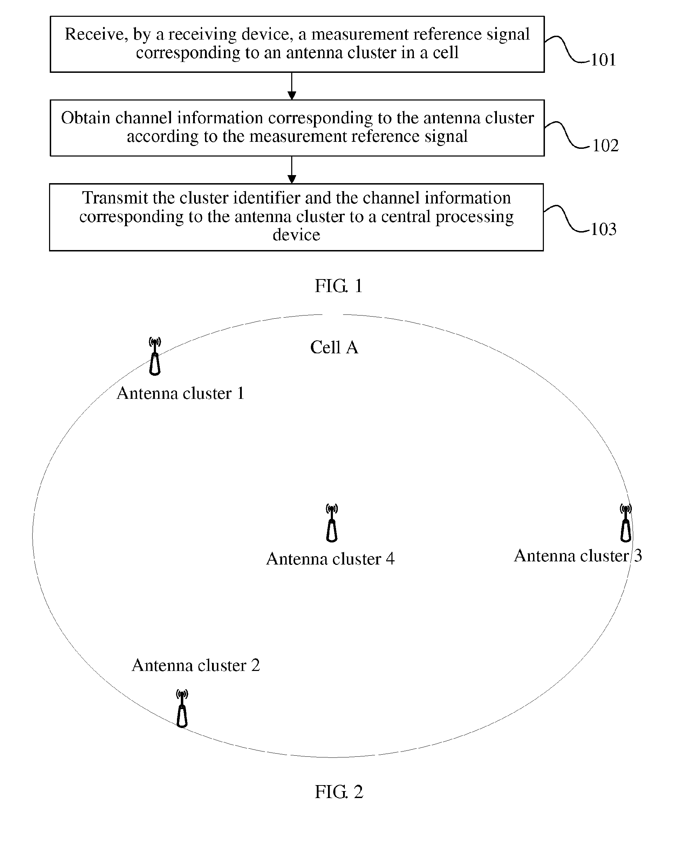

As shown in FIG. 1, an embodiment of the present invention provides a communication method and a receiving device based on downlink data such as a UE or a repeater station, for a DAS, where the method includes the following steps:

Step 101: A receiving device receives a measurement reference signal corresponding to an antenna cluster in a cell, where all antennas in the cell are divided into at least one antenna cluster, and each antenna cluster includes at least one antenna and has a corresponding cluster identifier.

In all embodiments of the present invention, all antennas in the cell are divided into at least one antenna cluster; that is, the sum of the number of antennas in all antenna clusters is equal to the number of antennas in the cell. One cell may have only one antenna cluster or multiple antenna clusters, and each antenna cluster includes at least one antenna and has a corresponding cluster identifier. Through antenna clustering, limited measurement reference signal resources are utilized by more antennas. It should be noted that, in embodiments of the present invention, the antenna unit in clustering may be one antenna, or multiple antennas that are considered as one antenna logically, or an AU that includes at least one antenna.

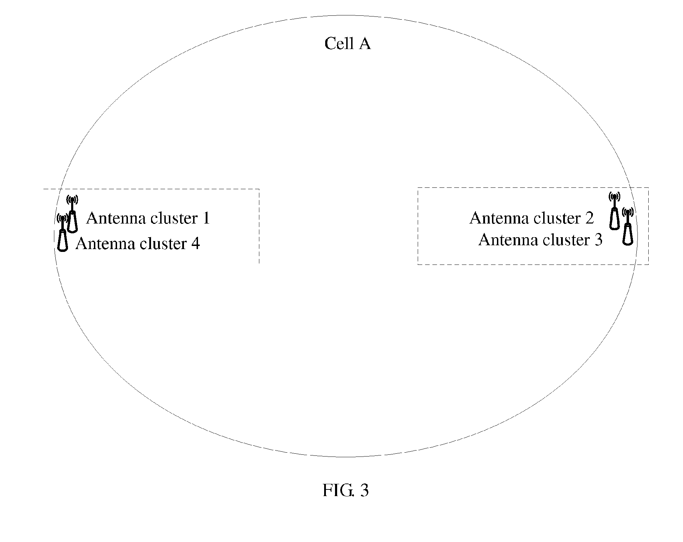

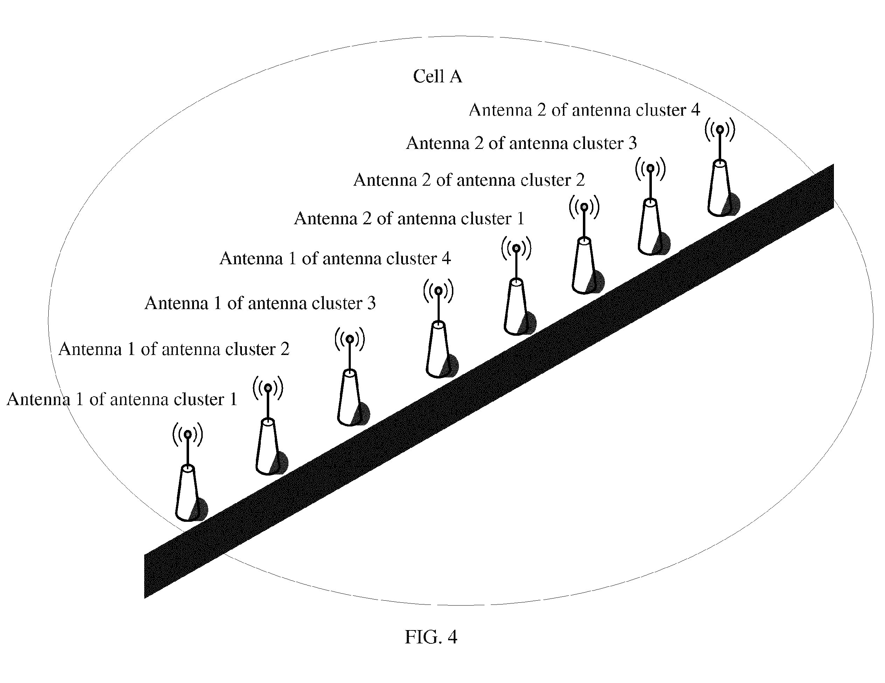

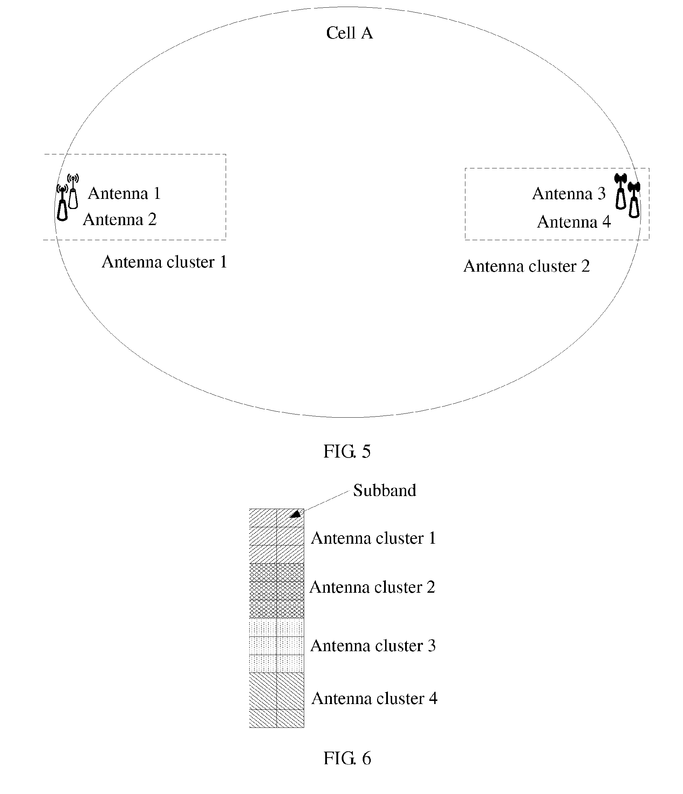

Specifically, FIG. 2 to FIG. 5 illustrate several antenna clustering methods adopted in the communication method according to embodiments of the present invention. According to the antenna clustering method in FIG. 2, in cell A, antennas are deployed at four location site, and each location site is an antenna cluster, and the antenna clusters are identified with cluster identifiers 1, 2, 3, and 4. The antenna clusters 1, 2, and 3 are deployed on the edge of cell A and are relatively far away from each other. The antenna cluster 4 is deployed in the center of cell A. Such deployment ensures that signals are evenly distributed in cell A. According to the antenna clustering method in FIG. 3, in cell A, antennas are deployed at two location sites, and similarly, the antenna clusters are identified with cluster identifiers 1, 2, 3, and 4. Each location site has two antenna clusters. According to the antenna clustering method in FIG. 4, in cell A, the distribution of the receiving device such as a UE or a repeater station is limited in the gray straight-line area in FIG. 4. In cell A, eight antennas are deployed along the straight-line area, and divided into four antenna clusters. The antenna clusters are identified with cluster identifiers 1, 2, 3, and 4, and each antenna cluster includes two antennas; that is, antenna 1 and antenna 2. Such antenna deployment and antenna clustering ensure smooth handover and the handover speed, even in the moment when a UE or a repeater station is running at a high speed. According to the antenna clustering method in FIG. 5, in cell A, two AUs are deployed, each AU includes two antennas; that is, antenna 1 and antenna 2, and each AU is considered as an antenna cluster.

It can be understood that, the antenna clustering methods shown in FIG. 2 to FIG. 5 are merely examples described in the communication method according to embodiments of the present invention, and the present invention is not limited to these examples. In fact, antenna clustering methods used in a cell can be determined according to the actual situations such as system performance requirements. Specifically, the rule for dividing antenna clusters is as follows: After antenna clustering, antennas in an antenna cluster may use different large-scale fading channels as far as possible. For example, antennas in an antenna cluster are deployed as far as possible in geographical location. Definitely, the present invention is not limited to the preceding principle.

It should be noted that, in normal cases, the measurement reference signal and the data transmitted to the receiving device are transmitted and received at the same time. The receiving device extracts the measurement reference signal from the received information to perform operations in the following steps.

Further, the step includes:

receiving, by the receiving device, the measurement reference signal corresponding to an antenna cluster in the cell, where the measurement reference signal corresponds to an antenna cluster; and

determining the cluster identifier of the antenna cluster corresponding to the measurement reference signal according to the measurement reference signal.

The measurement reference signal received by the receiving device corresponds to an antenna cluster. That is, the measurement reference signal is unique to the antenna cluster. The measurement reference signal corresponding to the antenna cluster in the cell is different, so that the receiving device can distinguish the antenna cluster according to the measurement reference signal. Therefore, the receiving device can determine the cluster identifier of the antenna cluster according to the measurement reference signal of the antenna cluster. For example, the measurement reference signal corresponding to an antenna cluster may be an orthogonal signal or a non-orthogonal signal between antenna clusters. The orthogonal measurement reference signal may be any reference signal that does not occupy the same frequency and time, or that uses different orthogonal code words. The non-orthogonal measurement reference signal may be the same signal that is used as the measurement reference signal of the antenna cluster after being scrambled by using different non-orthogonal scrambling codes; that is, the signal is not orthogonal between the antenna clusters, but is scrambled with different scrambling codes. Definitely, the other signal may be used as the measurement reference signal, which is not limited in the present invention.

Step 102: Obtain channel information corresponding to the antenna cluster according to the measurement reference signal.

In this step, the receiving device measures the measurement reference signal of the antenna cluster to obtain channel information corresponding to the antenna cluster. Specifically, the channel information includes a channel quality indicator CQI (Channel Quality Indicator), a channel correlation, and a channel coefficient.

Step 103: Transmit the cluster identifier and the channel information corresponding to the antenna cluster to a central processing device, so that the central processing device determines the antenna cluster serving the receiving device according to the cluster identifier and the channel information corresponding to the antenna cluster.

In this way, the central processing device determines the antenna cluster serving the receiving device according to the cluster identifier and the channel information corresponding to the antenna cluster transmitted by the receiving device, where at least one antenna cluster is determined by the central processing device. Normally, the determined antenna cluster is the optimal antenna cluster for serving the receiving device. For example, the optimal antenna cluster may be close to the antenna cluster that the antenna of the receiving device is divided into, or close to the antenna cluster whose antenna has the best channel quality, and serves the receiving device through the determined antenna cluster. Meanwhile, the antenna of the other antenna cluster does not transmit the signal or transmit the other signal. Therefore, not all antennas are required to transmit the same signal, thereby effectively reducing interference to a neighboring cell and increasing the system capacity.

The cluster identifiers and the channel information corresponding to the antenna clusters transmitted to the central processing device may be the cluster identifiers and the channel information corresponding to all antenna clusters in the cell, or may be cluster identifiers and the channel information corresponding to a part of antenna clusters in the cell. For example, after the receiving device preselects the antenna cluster according to the obtained channel information, the cluster identifier of the antenna cluster may be the cluster identifier and the channel information corresponding to the selected antenna cluster. Specifically, after step 102 and before step 103, the communication method according to this embodiment further includes:

determining a preferred antenna cluster used by the receiving device according to the channel information, where at least one preferred antenna cluster is used.

In this step, the transmitting the cluster identifier and the channel information corresponding to the antenna cluster to the central processing device includes:

transmitting the cluster identifier and the channel information corresponding to the preferred antenna cluster to the central processing device. In this way, the central processing device determines the antenna cluster serving the receiving device according to the cluster identifier and the channel information corresponding to the preferred antenna cluster transmitted and used by the receiving device.

A transmitting method that the receiving device uses to transmit the cluster identifier of the antenna cluster to the central processing device may be explicit or implicit. When an explicit transmitting method is used, the information transmitted by the receiving device directly includes the cluster identifier. When an implicit transmitting method is used, the information transmitted by the receiving device does not include the cluster identifier directly; that is, the cluster identifier is concealed in the information transmitted by the receiving device. For example, if the corresponding relationship between the antenna cluster and the measurement reference signal is preset between the central processing device and the receiving device, the central processing device directly extracts the cluster identifier from the channel information transmitted by a receiving end according to the corresponding relationship. Therefore, the cluster identifier needs not to be included in the transmitted information. Specifically, as shown in FIG. 6, a frequency band occupied by the cell is divided. The frequency band is divided into several non-overlapping subbands. After each antenna cluster is bound with a subband, the antenna cluster transmits data only over the bound subband. Grids shown in FIG. 6 represent different subbands. That is, different subbands are bound with different antenna clusters, and different grids are filled in different manners to represent different subbands. The measurement reference signal corresponding to the antenna cluster is the measurement reference signal transmitted over the subband corresponding to the antenna cluster, and the channel information corresponding to the antenna cluster is the channel information of the subband. In this step, the receiving device transmits the channel information of each subband to the central processing device. As a subband corresponds to an antenna cluster, the central processing device can determine the cluster identifier of the antenna cluster corresponding to the channel information according to the subband corresponding to the channel information.

According to the communication method for a DAS provided in the embodiment of the present invention, the optimal antenna cluster for serving a receiving device can be selected, and the antenna of the selected antenna cluster is used to serve the receiving device. Meanwhile, the antenna of the other antenna cluster in the cell does not transmit the signal or transmit the other signal, thereby effectively reducing interference to the neighboring cell and increasing the system capacity of the DAS. In addition, because the antenna clusters belong to the same cell, no signaling interaction at a high layer is required when the handover of the receiving device is implemented between these antenna clusters, thereby decreasing the number of handovers and reducing the handover delay. Therefore, interference to the neighboring cell is significantly reduced, and the system capacity of the DAS is increased. The communication method for a DAS provided in the embodiment of the present invention effectively improves the performance of the entire system.

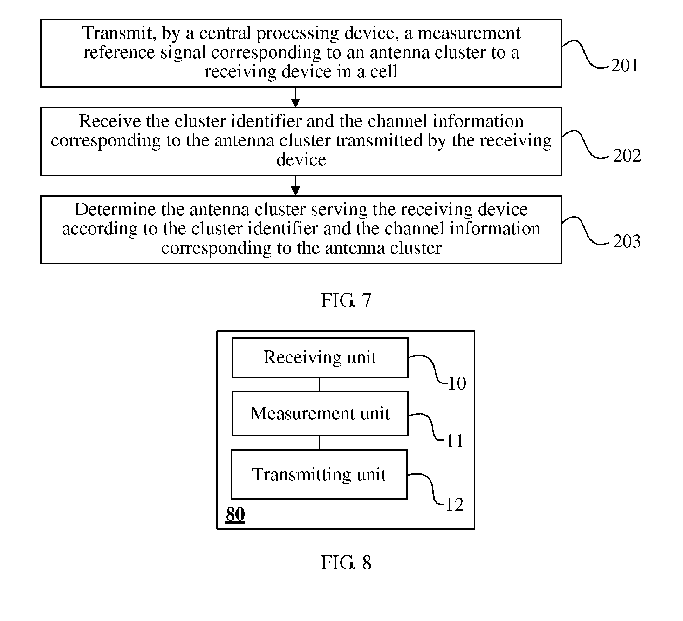

Corresponding to the communication method shown in FIG. 1, a communication method and a central processing device based on transmitted downlink data such as a base station or a central unit (CU, Central Unit), for a DAS are provided in an embodiment of the present invention. As shown in FIG. 7, the method includes the following steps:

Step 201: A central processing device transmits a measurement reference signal corresponding to an antenna cluster to a receiving device in a cell, where all antennas in the cell are divided into at least one antenna cluster, and each antenna cluster includes at least one antenna and has a corresponding cluster identifier.

In this way, the receiving device obtains channel information corresponding to the antenna cluster by measuring the measurement reference signal. Further, the receiving device determines, according to the channel information, the antenna cluster that the receiving device wants to use, that is, a preferred antenna cluster used by the receiving device.

Further, in this step, the measurement reference signal transmitted by the central processing device corresponds to an antenna cluster. That is, the measurement reference signal is unique to the antenna cluster. The measurement reference signal corresponding to the antenna cluster in the cell is different, so that the receiving device can distinguish the antenna cluster according to the measurement reference signal. That is, the receiving device determines the cluster identifier of the antenna cluster according to the measurement reference signal of the antenna cluster. For example, the measurement reference signal corresponding to an antenna cluster may be an orthogonal signal or a non- orthogonal signal between antenna clusters. The orthogonal measurement reference signal may be any reference signal that occupies the same frequency and time at different time, or that uses different orthogonal code words. The non- orthogonal measurement reference signal may be the same signal that is used as the measurement reference signal of the antenna cluster after being scrambled by using different non- orthogonal scrambling codes; that is, the signal is not orthogonal between the antenna clusters, but is scrambled with different scrambling codes. Definitely, the other signal may be used as the measurement reference signal.

Step 202: Receive the cluster identifier and the channel information corresponding to the antenna cluster transmitted by the receiving device.

The cluster identifiers and the channel information corresponding to the antenna clusters may be cluster identifiers and the channel information corresponding to all antenna clusters in the cell, or may be cluster identifiers and the channel information corresponding to a part of antenna clusters in the cell. Specifically, this step includes:

receiving the cluster identifiers and the channel information corresponding to all antenna clusters in the cell transmitted by the receiving device; or

receiving the cluster identifier and the channel information corresponding to a preferred antenna cluster used and transmitted by the receiving device, where the receiving device uses at least one preferred antenna cluster.

In this step, the cluster identifier in the received information may be explicit; that is, the received information directly includes the cluster identifier; the cluster identifier may be implicit; that is, the cluster identifier is not included in the received information directly, but is concealed in the received information.

Therefore, a corresponding relationship between the antenna cluster and the measurement reference signal must be preset between the central processing device and the receiving device; the central processing device directly extracts the cluster identifier of the channel information transmitted by a receiving end according to the corresponding relationship, and the cluster identifier needs not to be included in the transmitted information. Take the clustering method shown in FIG. 6 as an example. Each antenna cluster is bound with a subband. After the binding, the antenna cluster transmits data only over the bound subband. A subband corresponds to an antenna cluster. Specifically, this step includes:

receiving the channel information of the subband transmitted by the receiving device; and

determining the cluster identifier of the antenna cluster corresponding to the channel information according to the subband corresponding to the channel information.

That is, in this case, the central processing device only needs to receive the channel information transmitted by the receiving device for determining the cluster identifier of the antenna cluster corresponding to the channel information.

Step 203: Determine the antenna cluster serving the receiving device according to the cluster identifier and the channel information corresponding to the antenna cluster.

In this step, the central processing device determines the antenna cluster serving the receiving device according to the cluster identifier of the antenna cluster and the corresponding channel information, and determines that the antenna cluster is usually the optimal antenna cluster that is used to serve the receiving device. For example, the optimal antenna cluster may be close to the antenna cluster that the antenna of the receiving device is divided into, and serves the receiving device through the determined antenna cluster. Meanwhile, the antenna of the other antenna cluster does not transmit the signal or transmit the other signal. Therefore, not all antennas are required to transmit the same signal, thereby effectively reducing interference to a neighboring cell and increasing the system capacity.

Further, when the antenna cluster determined by the central processing device for the receiving device includes multiple antennas, the communication method according to this embodiment further includes:

determining the antenna serving the receiving device in the determined antenna cluster to further reduce interference to the neighboring cell and increase the system capacity of the DAS.

Specifically, the central processing device determines the antenna serving the receiving device in the determined antenna cluster and a transmission solution based on the reciprocity between an uplink channel and a downlink channel. The data transmitted through the antenna of the determined antenna cluster may be the same or different, and the transmission solution such as a spatial multiplexing solution or a transmit diversity solution, may be used by the antenna of the determined antenna cluster.

According to the communication method for a DAS provided in the embodiment of the present invention, the optimal antenna cluster for serving a receiving device can be selected, and the antenna of the selected antenna cluster is used to serve the receiving device. Meanwhile, the antenna of the other antenna cluster in the cell does not transmit the signal or transmit the other signal, thereby effectively reducing interference to the neighboring cell and increasing the system capacity of the DAS. In addition, because the antenna clusters belong to the same cell, no signaling interaction at a high layer is required when the handover of the receiving device is implemented between these antenna clusters, thereby decreasing the number of handovers and reducing the handover delay. Therefore, interference to the neighboring cell is significantly reduced, and the system capacity of the DAS is increased. The communication method for a DAS provided in the embodiment of the present invention effectively improves the performance of the entire system.

The communication method for a DAS provided in an embodiment of the present invention is described in further detail by taking an LTE (Long Time Evolution, Long Time Evolution) system as an example.

This embodiment is based on the scenario where a single downlink subscriber uses the LTE Release 8 (Release 8). Multiple antennas are deployed at different places in a cell, where all antennas in the cell are divided into four antenna clusters, for example, using the antenna clustering methods as shown in FIG. 2 to FIG. 4. Each antenna cluster occupies one antenna port (referred to as antenna port in the LTE system), each antenna port uses a cell-specific reference signal CRS (Cell-specific Reference Signal, cell-specific reference signal) in the LTE Release 8 system as an orthogonal pilot of a measurement reference signal. In this way, a UE can distinguish and determine the antenna cluster according to the different antenna port of the measurement reference signal. This embodiment includes the following steps:

Step 301: A base station (a central processing device) transmits, to a UE (a receiving device) in the cell, an orthogonal pilot signal corresponding to an antenna cluster.

Step 302: The UE receives the orthogonal pilot signal corresponding to an antenna cluster.

Step 303: The UE obtains channel information corresponding to the antenna cluster according to the orthogonal pilot signal corresponding to an antenna cluster.

In this embodiment, the channel information corresponding to the antenna cluster is a CQI.

Step 304: The UE determines a preferred antenna cluster used by the UE according to the channel information corresponding to the antenna cluster.

In this step, the UE uses at least one preferred antenna cluster.

Step 305: The UE transmits the cluster identifier and the channel information of the preferred antenna cluster to the base station.

Specifically, if the UE selects only one antenna cluster each time, in this embodiment, if the UE selects one preferred antenna cluster from the four antenna clusters, the UE transmits, to the base station, a precoding matrix indicator PMI (Precoding Matrix Indicator) corresponding to the preferred antenna cluster used by the receiving device and the CQI of the channel information corresponding to the preferred antenna cluster, where the PMI corresponds to a preset precoding matrix; that is, an antenna clustering codebook. After receiving the PMI, the base station obtains the cluster identifier of the preferred antenna cluster according to the PMI and the precoding matrix. A corresponding relationship between the PMI and the preset precoding matrix (that is, the antenna clustering codebook) is shown in Table 1.

If the UE selects multiple antenna clusters each time, for example, in this embodiment, if the UE selects two preferred antenna clusters from the four antenna clusters, the UE may similarly transmit, to the base station, the precoding matrix indicators PMIs (Precoding Matrix Indicators) corresponding to the preferred antenna clusters used by the receiving device and the CQIs of the channel information corresponding to the preferred antenna clusters, where the PMI corresponds to the preset precoding matrix, that is, the antenna cluster codebook. After receiving the PMIs, the base station obtains the cluster identifiers of the preferred antenna clusters according to the PMIs and the precoding matrixes. The corresponding relationship between the PMIs and the preset precoding matrixes (that is, the antenna clustering codebook) is shown in Table 2. In this case, the CQI transmitted by the UE to the base station represents a value of the channel information of two antenna clusters at the same time. Based on the PMI value, the base station determines the preferred antenna clusters used by the UE from the four antenna clusters. The PMI value further represents the channel information of the preferred antenna clusters.

Step 306: The base station receives the cluster identifier and the channel information of the preferred antenna cluster transmitted and used by the UE.

Step 307: The base station determines the antenna cluster serving the UE according to the received cluster identifier and the channel information of the preferred antenna cluster used by the UE.

Specifically, in this embodiment, the base station determines the antenna cluster serving the UE according to the CQI and PMI transmitted by the UE.

Further, if the antenna cluster includes multiple antennas, the base station selects the antenna with the maximum received power as the antenna serving the UE according to a sounding reference signal (Sounding Reference Signal) transmitted by the antenna of the antenna cluster in an uplink, or according to received power of a RACH (Random Access Channel, random access channel) .

**Table 1 Antenna clustering codebook where one antenna cluster is selected from four antenna clusters**

| Precoding Matrix Indicator | 0 | 1 | 2 | 3 |
|---|---|---|---|---|
| Precoding matrix | $\frac{1}{2}\begin{bmatrix} 1 \\ 0 \\ 0 \\ 0 \end{bmatrix}$ | $\frac{1}{2}\begin{bmatrix} 0 \\ 1 \\ 0 \\ 0 \end{bmatrix}$ | $\frac{1}{2}\begin{bmatrix} 0 \\ 0 \\ 1 \\ 0 \end{bmatrix}$ | $\frac{1}{2}\begin{bmatrix} 0 \\ 0 \\ 0 \\ 1 \end{bmatrix}$ |

**Table 2 Antenna clustering codebook where two antenna clusters are selected from four antenna clusters and j is an imaginary unit**

| Precoding Matrix Indicator | 0 | 1 | 2 | 3 | 4 | 5 | 6 | 7 |
|---|---|---|---|---|---|---|---|---|
| Precoding matrix | $\dfrac{1}{2}\begin{bmatrix}1\\0\\0\\1\end{bmatrix}$ | $\dfrac{1}{2}\begin{bmatrix}1\\0\\0\\-1\end{bmatrix}$ | $\dfrac{1}{2}\begin{bmatrix}1\\0\\0\\j\end{bmatrix}$ | $\dfrac{1}{2}\begin{bmatrix}1\\0\\0\\-j\end{bmatrix}$ | $\dfrac{1}{2}\begin{bmatrix}0\\1\\1\\0\end{bmatrix}$ | $\dfrac{1}{2}\begin{bmatrix}0\\1\\-1\\0\end{bmatrix}$ | $\dfrac{1}{2}\begin{bmatrix}0\\1\\j\\0\end{bmatrix}$ | $\dfrac{1}{2}\begin{bmatrix}0\\1\\-j\\0\end{bmatrix}$ |

This embodiment is based on the scenario where a single downlink subscriber uses the LTE Release 10 (Release 10). In this embodiment, if an AU is used as a clustering unit in division of the antenna cluster, each AU includes one or more antennas, each antenna cluster includes one or more AUs, and the AU of the antenna cluster includes the same number of antennas. A frequency band occupied by a cell is divided into several non-overlapping subbands, and all frequency bands in the cell are divided into subbands. That is, no frequency band that is not divided exists in the cell. After division, the total number of subbands is equal to the number of antenna clusters in the cell. According to the antenna clustering shown in FIG. 6, after each antenna cluster is bound with a subband, the antenna cluster transmits data only over the bound subband. It should be noted that, the range of the bound subband of each antenna cluster may be the same or different without limitation. Different antenna clusters use different CSI-RSs (Channel State Information Reference Signals, channel state information reference signals) over different subbands as measurement reference signals; that is, CSI-RSs are used as the measurement reference signals. This embodiment includes the following steps:

Step 401: A base station (a central processing device) transmits, to a UE (a receiving device) in the cell, a CSI-RS of the subband, that is, the CSI-RS corresponding to the antenna cluster.

Step 402: The UE receives the CSI-RS corresponding to the subband.

Step 403: The UE obtains a CQI and a PMI (Precoding Matrix Indicator, precoding matrix indicator) of the subband according to the CSI-RS corresponding to the antenna cluster.

The CQI is the channel information of the subband.

Step 404: The UE transmits the CQIs and the PMIs of all subbands to the base station.

In this step, the UE may determine a preferred subband used by the UE according to the CQI of the subband, where at least one preferred subband is used by the UE, and the UE transmits the CQI and the PMI of the preferred subband to the base station.

It should be noted that, if the AU includes only one antenna, the UE needs to transmit the CQIs of all subbands, but does not need to transmit the PMIs of all subbands. If the AU includes multiple antennas, the UE needs to transmit the CQIs and the PMIs of all subbands.

Step 406: The base station receives the CQIs and the PMIs of all subbands transmitted by the UE.

Step 407: The base station allocates resources and determines the subband serving the UE according to the received CQIs and PMIs of all subbands.

Because one subband only corresponds to one antenna cluster, the procedure of selecting the subband is the procedure to select the antenna cluster serving the UE. Specifically, the base station selects, according to the channel quality of the subband, the antenna cluster with the best channel quality and allocates the antenna cluster to the UE. If an antenna cluster includes multiple AUs, the base station selects the AU with the maximum received power as the AU serving the UE according to a sounding reference signal (Sounding Reference Signal) transmitted by the antenna of the AU in an uplink, or according to received power of a RACH (Random Access Channel, random access channel).

It should be noted that, in this embodiment, the binding between the antenna cluster and the subband may be static or dynamic. The static binding is specified after deploying the antenna in the cell, and the dynamic binding is adjusted by the base station according to the requirements, for example, change of the subscriber load, after a certain interval.

Although the preceding two embodiments are based on the LTE system, the communication method provided in the present invention is not limited to the LTE system. This method may be applicable to a wireless cellular system that uses the other mode, such as a TD-SCDMA (Time Division-Synchronous Code Division Multiple Access, time division-synchronous code division multiple access) system or a WCDMA (Wideband Code Division Multiple Access, wideband code division multiple access) system.

Corresponding to the communication method shown in FIG. 1, an embodiment of the present invention further provides a receiving device 80 for a DAS. As shown in FIG. 8, the receiving device 80 includes:

a receiving unit 10, configured to receive a measurement reference signal corresponding to an antenna cluster in a cell, where all antennas in the cell are divided into at least one antenna cluster, and each antenna cluster includes at least one antenna and has a corresponding cluster identifier;
a measurement unit 11, configured to obtain channel information corresponding to the antenna cluster according to the measurement reference signal; and
a transmitting unit 12, configured to transmit the cluster identifier and the channel information corresponding to the antenna cluster to a central processing device, so that the central processing device determines the antenna cluster serving the receiving device according to the cluster identifier and the channel information corresponding to the antenna cluster.

According to the receiving device for a DAS provided in the embodiment of the present invention, the antenna cluster for serving the receiving device can be selected, and the selected antenna cluster is used to serve the receiving device, thereby effectively reducing interference to a neighboring cell and increasing the system capacity of the DAS. In addition, because the antenna clusters belong to the same cell, no signaling interaction at a high layer is required when the handover of the receiving device is implemented between these antenna clusters, thereby decreasing the number of handovers and reducing the handover delay. Therefore, the receiving device for a DAS provided in the embodiment of the present invention effectively improves the performance of the entire communication system.

The receiving device 10 is specifically configured to receive the measurement reference signal corresponding to an antenna cluster, and determine the cluster identifier of the antenna cluster according to the measurement reference signal. For example, the measurement reference signal corresponding to an antenna cluster may be an orthogonal signal between antenna clusters, or may be a non-orthogonal signal that is scrambled with the different scrambling code between antenna clusters.

The transmitting unit 12 is specifically configured to transmit, to the central processing device, the cluster identifiers and the channel information corresponding to all antenna clusters in the cell, or the cluster identifiers and the channel information corresponding to a part of antenna clusters in the cell.

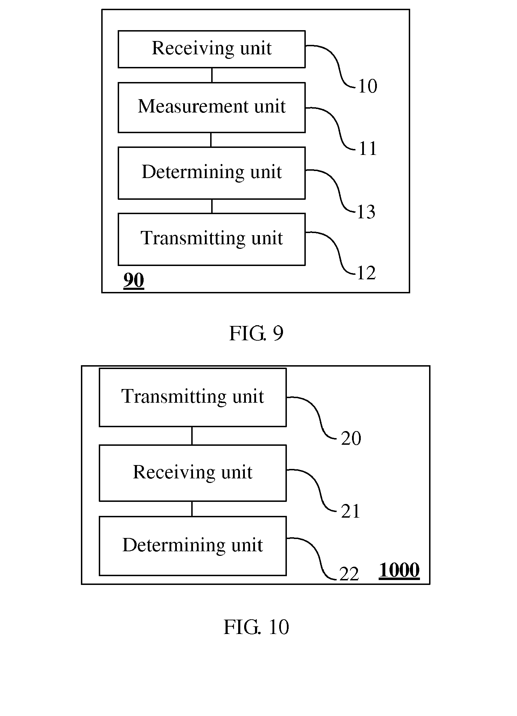

Further, as shown in FIG. 9, a receiving device 90 provided in this embodiment may further include a determining unit 13, configured to determine a preferred antenna cluster used by the receiving device according to the channel information. The transmitting unit 12 is specifically configured to transmit the cluster identifier and the channel information of the preferred antenna cluster to the central processing device. In an embodiment of the present invention, the transmitting unit 12 is specifically configured to transmit a precoding matrix indicator corresponding to the preferred antenna cluster to the central processing device. The precoding matrix indicator corresponds to a preset precoding matrix, and the central processing device can obtain the cluster identifier of the preferred antenna cluster according to the Precoding Matrix Indicator and the precoding matrix.

The transmitting method that the transmitting unit 12 uses to transmit the cluster identifier to the central processing device may be explicit; that is, the cluster identifier is directly transmitted to the central processing device; or may be implicit; that is, the cluster identifier is concealed in the transmitted information. For example, in an embodiment of the present invention, the receiving unit 10 is specifically configured to receive the measurement reference signal transmitted over the subband corresponding to the antenna cluster, where a subband corresponds to an antenna cluster, and each antenna cluster transmits data only over the corresponding subband. The measurement unit 11 is specifically configured to determine the channel information of the subband according to the measurement reference signal. The transmitting unit 12 is specifically configured to transmit the channel information of the subband to the central processing device. Because a subband corresponds to an antenna cluster, although the transmitting unit 12 uses the implicit transmitting method, the central processing device can determine the cluster identifier of the antenna cluster transmitted by the receiving device according to the subband corresponding to the channel information.

Corresponding to the method shown in FIG. 7, an embodiment of the present invention further provides a receiving device 1000 for a DAS. As shown in FIG. 10, the receiving device 1000 includes:

a transmitting unit 20, configured to transmit a measurement reference signal corresponding to an antenna cluster to a receiving device in a cell, where all antennas in the cell are divided into at least one antenna cluster, and each antenna cluster includes at least one antenna and has a corresponding cluster identifier;
a receiving unit 21, configured to receive the cluster identifier and channel information corresponding to the antenna cluster transmitted by the receiving device; and
a determining unit 22, configured to determine the antenna cluster serving the receiving device according to the cluster identifier and the channel information corresponding to the antenna cluster.

According to the central processing device for a DAS provided in the embodiment of the present invention, the antenna cluster for serving the receiving device can be selected, and the selected antenna cluster is used to serve the receiving device, thereby effectively reducing interference to a neighboring cell and increasing the system capacity of the DAS. In addition, because the antenna clusters belong to the same cell, no signaling interaction at a high layer is required when the handover of the receiving device is implemented between these antenna clusters, thereby decreasing the number of handovers and reducing the handover delay. Therefore, the receiving device for a DAS provided in an embodiment of the present invention effectively improves the performance of the entire communication system.

The transmitting unit 20 is specifically configured to transmit the measurement reference signal corresponding to an antenna cluster to the receiving device in the cell, where the measurement reference signal corresponds to an antenna cluster, and the receiving device can determine the cluster identifier of the antenna cluster corresponding to the measurement reference signal according to the measurement reference signal. For example, the measurement reference signal corresponding to an antenna cluster may be an orthogonal signal between antenna clusters, or may be a non-orthogonal signal that is scrambled with the different scrambling code between antenna clusters.

The receiving unit 21 is specifically configured to receive the cluster identifiers and the channel information corresponding to all antenna clusters in the cell transmitted by the receiving device, or receive the cluster identifier and the channel information corresponding to a preferred antenna cluster used and transmitted by the receiving device in the cell, where the receiving device uses at least one preferred antenna cluster. In an embodiment of the present invention, the receiving unit 21 is specifically configured to receive a precoding matrix indicator corresponding to the preferred antenna cluster used and transmitted by the receiving device. The precoding matrix indicator corresponds to a preset precoding matrix. Therefore, the central processing device provided in this embodiment can determine the cluster identifier of the preferred antenna cluster used by the receiving device according to the precoding matrix indicator and the preset precoding matrix.

The receiving unit 21 is specifically configured to receive cluster identifiers and the channel information corresponding to all antenna clusters in the cell, or receive the cluster identifier and the channel information corresponding to the preferred antenna cluster used by the receiving device in the cell, where the receiving device uses at least one preferred antenna cluster. In an embodiment of the present invention, the receiving unit 21 is specifically configured to receive the precoding matrix indicator corresponding to the preferred antenna cluster used and transmitted by the receiving device. The precoding matrix indicator corresponds to a preset precoding matrix. Therefore, the central processing device provided in this embodiment can determine the cluster identifier of the preferred antenna cluster used by the receiving device according to the precoding matrix indicator and the preset precoding matrix.

The cluster identifier in the information received by the receiving unit 21 may be explicit; that is, the received information directly includes the cluster identifier; the cluster identifier may be implicit; that is, the cluster identifier is not included in the received information directly, but is concealed in the received information. In an embodiment of the present invention, when the cluster identifier is implicit, the transmitting unit 20 is specifically configured to transmit, to the receiving device in the cell, the measurement reference signal transmitted over the subband corresponding to antenna cluster. A subband corresponds to an antenna cluster, and the antenna cluster transmits data only over the corresponding subband.

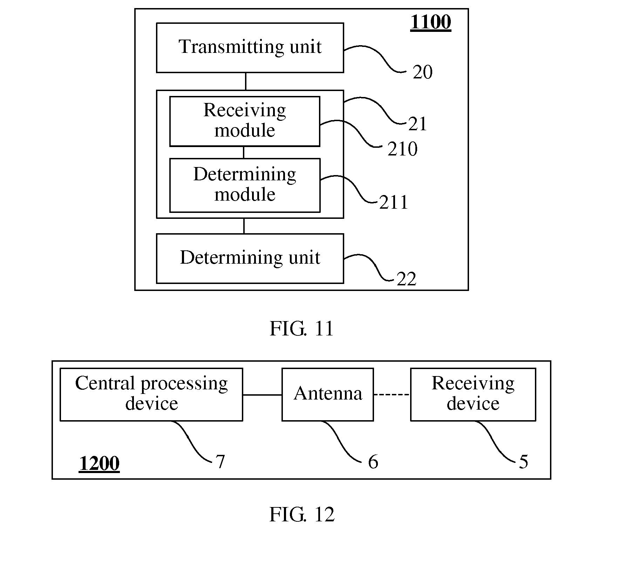

As shown in FIG. 11, the receiving unit 21 of a receiving device 1100 further includes:

a receiving module 210, configured to receive the channel information of the subband transmitted by the receiving device; and
a determining module 211, configured to determine the cluster identifier of the antenna cluster corresponding to the channel information according to the subband corresponding to the channel information.

Accordingly, an embodiment of the present invention further provides a DAS system 1200. As shown in FIG. 12, the DAS system 1200 includes:

a receiving device 5, an antenna 6, and a central processing device 7 that are located in the same cell, where all the antennas 6 in the cell are divided into at least one antenna cluster, and each antenna cluster includes at least one antenna and has a corresponding cluster identifier.

The receiving device 5 is configured to receive a measurement reference signal corresponding to an antenna cluster in the cell; obtain channel information corresponding to the antenna cluster according to the measurement reference signal; determine a preferred antenna cluster used by the receiving device according to the channel information; and transmit the cluster identifier and the channel information corresponding to the antenna cluster to the central processing device 7;

The central processing device 7 is configured to transmit the measurement reference signal corresponding to an antenna cluster to the receiving device 5; receive the cluster identifier and the channel information corresponding to the antenna cluster transmitted by the receiving device 5; and determine the antenna cluster serving the receiving device according to the cluster identifier and the channel information corresponding to the antenna cluster.

According to the DAS provided in the embodiment of the present invention, the antenna cluster for serving the receiving device can be selected, and the selected antenna cluster is used to serve the receiving device, thereby effectively reducing interference to a neighboring cell and increasing the system capacity of the DAS. In addition, because the antenna clusters belong to the same cell, no signaling interaction at a high layer is required when the handover of the receiving device is implemented between these antenna clusters, thereby decreasing the number of handovers and reducing the handover delay. Therefore, the receiving device for a DAS provided in the embodiment of the present invention effectively improves the performance of the entire communication system.

As described in detail in the above, the receiving device 5 may be the receiving device provided in the embodiment of the present invention, and the central processing device 7 may be the central processing device provided in the embodiment of the present invention. The content is not described herein again.

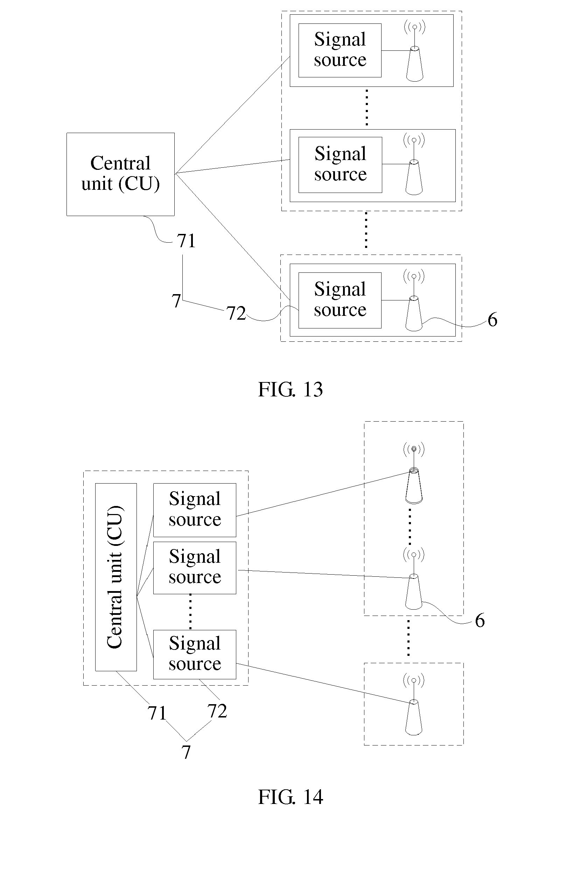

The DAS provided in the embodiment of the present invention may have a distributed architecture. Specifically, as shown in FIG. 13, a central processing device 7 includes a CU 71 and a signal source 72, where each antenna 6 is connected to the independent signal source 72 corresponding to the antenna 6, the CU 71 is connected to each signal source 72, and each signal source 72 is responsible for converting a digital baseband signal from the CU to a radio-frequency signal and converting the radio-frequency signal received by the distributed antenna that is connected to the signal source 72 to a baseband signal, and transmitting the baseband signal to the CU. The CU is responsible for assigning the digital baseband signal that needs to be transmitted to the different independent signal sources 72 in a downlink, and jointly processes all digital baseband signals from the connected signal source 72 in an uplink. The signal source 72 and the antenna 6 are located at the same location site. A dashed box in FIG. 13indicates the same location site. In addition, the DAS provided in the embodiment of the present invention may have a centralized architecture. Specifically, as shown in FIG. 14, a dashed box indicates the same location site. The signal source 72 and the CU 71 are located at the same location site, and multiple antennas 6 are located at the same location site. Definitely, the DAS provided in the embodiment of the present invention may use other architecture, which is not limited in the present invention.

Persons of ordinary skill in the art should understand that all or a part of the processes of the methods in the embodiments may be implemented by a computer program instructing relevant hardware. The program may be stored in a computer readable storage medium. When the program is run, the steps of the methods in the embodiments are performed. The storage medium may be any medium capable of storing program codes, such as a ROM, a RAM, a magnetic disk, an optical disk, and the like.

**Claims**

1. A communication method of a distributed antenna system, comprising:

   receiving, by a receiving device, a measurement reference signal of an antenna cluster in a cell, wherein all antennas in the cell are divided into at least one antenna cluster, and each antenna cluster comprises at least one antenna and has a corresponding cluster identifier;
   obtaining channel information of the antenna cluster according to the measurement reference signal; and
   transmitting the cluster identifier and the channel information of the antenna cluster to a central processing device, so that the central processing device determines the antenna cluster serving the receiving device according to the cluster identifier and the channel information of the antenna cluster.

2. The communication method according to claim 1, wherein the transmitting the cluster identifier and the channel information of the antenna cluster to the central processing device comprises:

   transmitting cluster identifiers and the channel information of all antenna clusters in the cell to the central processing device.

3. The communication method according to claim 1, wherein after the obtaining of the channel information of the antenna cluster according to the measurement reference signal and before the transmitting of the cluster identifier and the channel information of the antenna cluster to the central processing device, the method further comprises:

   determining, by the receiving device, a preferred antenna cluster used by the receiving device according to the channel information, wherein at least one preferred antenna cluster which the receiving device is used; and
   the transmitting the cluster identifier and the channel information of the antenna cluster to the central processing device comprises:

transmitting the cluster identifier and the channel information of the preferred antenna cluster to the central processing device.

**4.** The communication method according to claim 3, wherein the transmitting the cluster identifier and the channel information of the antenna cluster to the central processing device comprises:

transmitting a precoding matrix indicator of the preferred antenna cluster to the central processing device, wherein the precoding matrix indicator corresponds to a preset precoding matrix, and the central processing device is capable of obtaining the cluster identifier of the preferred antenna cluster according to the Precoding Matrix Indicator and the precoding matrix.

**5.** The communication method according to claim 1, wherein the receiving device receives the measurement reference signal of an antenna cluster in the cell comprises:

receiving, by the receiving device, the measurement reference signal of an antenna cluster in the cell, wherein the measurement reference signal corresponds to an antenna cluster; and
determining the cluster identifier of the antenna cluster of the measurement reference signal according to the measurement reference signal.

**6.** The communication method according to claim 5, wherein the measurement reference signal of an antenna cluster is an orthogonal signal between the antenna clusters or a non-orthogonal signal that is scrambled with the different scrambling code between the antenna clusters.

**7.** The communication method according to claim 1, wherein,
the measurement reference signal of the antenna cluster is the measurement reference signal transmitted over a subband of the antenna cluster, wherein the antenna cluster corresponds to the subband, and the antenna cluster transmits data only over the corresponding subband;
the channel information of the antenna cluster is the channel information of the subband; and
the transmitting the cluster identifier and the channel information of the antenna cluster to the central processing device comprises:

transmitting the channel information of the subband to the central processing device, determining, by the central processing device, the cluster identifier of the antenna cluster according to the subband of the channel information.

**8.** A communication method for a distributed antenna system, comprising:

transmitting a measurement reference signal of an antenna cluster to a receiving device in a cell, wherein all antennas in the cell are divided into at least one antenna cluster, and each antenna cluster comprises at least one antenna and has a corresponding cluster identifier;
receiving the cluster identifier and channel information of the antenna cluster transmitted by the receiving device; and
determining the antenna cluster serving the receiving device according to the cluster identifier and the channel information of the antenna cluster.

**9.** The communication method according to claim 8, wherein the transmitting the measurement reference signal of an antenna cluster to the receiving device in the cell comprises:

transmitting the measurement reference signal of an antenna cluster to the receiving device in the cell, wherein the measurement reference signal corresponds to an antenna cluster; and the receiving device is capable of determining the cluster identifier of the antenna cluster of the measurement reference signal according to the measurement reference signal.

**10.** The communication method according to claim 9, wherein the measurement reference signal of an antenna cluster is an orthogonal signal between the antenna clusters or a non-orthogonal signal that is scrambled with the different scrambling code between the antenna clusters.

**11.** The communication method according to claim 8, wherein the receiving the cluster identifier and channel information

EP 2 642 670 A1

of the antenna cluster transmitted by the receiving device comprises:

> receiving the cluster identifiers and the channel information of all antenna clusters in the cell transmitted by the receiving device; or
> receiving the cluster identifier and the channel information of a preferred antenna cluster used and transmitted by the receiving device, wherein the receiving device uses at least one preferred antenna cluster.

**12.** The communication method according to claim 11, wherein the receiving the cluster identifier and the channel information of the preferred antenna cluster used and transmitted by the receiving device comprises:

> receiving a precoding matrix indicator of the preferred antenna cluster used and transmitted by the receiving device, wherein the precoding matrix indicator corresponds to a preset precoding matrix.

**13.** The communication method according to claim 8, wherein,
the measurement reference signal of the antenna cluster is the measurement reference signal transmitted over a subband of the antenna cluster, wherein the antenna cluster corresponds to the subband, and the antenna cluster transmits data only over the corresponding subband; and
the receiving the cluster identifier and channel information of the antenna cluster transmitted by the receiving device comprises:

> receiving the channel information of the subband transmitted by the receiving device; and
> determining the cluster identifier of the antenna cluster of the channel information according to the subband of the channel information.

**14.** A receiving device for a distributed antenna system, comprising:

> a receiving unit, configured to receive a measurement reference signal of an antenna cluster in a cell, wherein all antennas in the cell are divided into at least one antenna cluster, and each antenna cluster comprises at least one antenna and has a corresponding cluster identifier;
> a measurement unit, configured to obtain channel information of the antenna cluster according to the measurement reference signal; and
> a transmitting unit, configured to transmit the cluster identifier and the channel information corresponding to the antenna cluster to a central processing device, so that the central processing device determines the antenna cluster serving the receiving device according to the cluster identifier and the channel information corresponding to the antenna cluster.

**15.** The receiving device according to claim 14, wherein,
the transmitting unit is specifically configured to transmit the cluster identifiers and the channel information of all antenna clusters in the cell to the central processing device.

**16.** The receiving device according to claim 14, wherein the receiving device further comprises a determining unit, configured to determine a preferred antenna cluster used by the receiving device according to the channel information; and
the transmitting unit is specifically configured to transmit the cluster identifier and the channel information of the preferred antenna cluster to the central processing device.

**17.** The receiving device according to claim 16, wherein the transmitting unit is specifically configured to transmit a precoding matrix indicator corresponding to the preferred antenna cluster to the central processing device, the precoding matrix indicator corresponds to a preset precoding matrix, and the central processing device is capable of obtaining the cluster identifier of the preferred antenna cluster according to the Precoding Matrix Indicator and the precoding matrix.

**18.** The receiving device according to claim 14, wherein the receiving unit is specifically configured to: receive the measurement reference signal corresponding to an antenna cluster in the cell, wherein the measurement reference signal corresponds to an antenna cluster; and determine the cluster identifier of the antenna cluster corresponding to the measurement reference signal according to the measurement reference signal.

**19.** The receiving device according to claim 14, wherein,

the receiving unit is specifically configured to receive the measurement reference signal transmitted over a subband corresponding to the antenna cluster, wherein the antenna cluster corresponds to the subband, and the antenna cluster transmits data only over the corresponding subband;

the measurement unit is specifically configured to determine the channel information of the subband according to the measurement reference signal; and

the transmitting unit is specifically configured to transmit the channel information of the subband to the central processing device.

**20.** A central processing device for a distributed antenna system, comprising:

a transmitting unit, configured to transmit a measurement reference signal corresponding to an antenna cluster to a receiving device in a cell, wherein all antennas in the cell are divided into at least one antenna cluster, and each antenna cluster comprises at least one antenna and has a corresponding cluster identifier;

a receiving unit, configured to receive the cluster identifier and channel information corresponding to the antenna cluster transmitted by the receiving device; and

a determining unit, configured to determine the antenna cluster serving the receiving device according to the cluster identifier and the channel information corresponding to the antenna cluster.

**21.** The central processing device according to claim 20, wherein the transmitting unit is specifically configured to transmit the measurement reference signal corresponding to an antenna cluster to the receiving device in the cell, wherein the measurement reference signal corresponds to an antenna cluster, and the receiving device is capable of determining the cluster identifier of the antenna cluster corresponding to the measurement reference signal according to the measurement reference signal.

**22.** The central processing device according to claim 20, wherein the receiving unit is specifically configured to receive the cluster identifiers and the channel information corresponding to all antenna clusters in the cell transmitted by the receiving device, or receive the cluster identifier and the channel information corresponding to a preferred antenna cluster used and transmitted by the receiving device, wherein the receiving device uses at least one preferred antenna cluster.

**23.** The central processing device according to claim 22, wherein the receiving unit is specifically configured to receive a precoding matrix indicator corresponding to the preferred antenna cluster used and transmitted by the receiving device, and the precoding matrix indicator corresponds to a preset precoding matrix.

**24.** The central processing device according to claim 20, wherein,

the transmitting unit is specifically configured to transmit the measurement reference signal transmitted over a subband corresponding to the antenna cluster to the receiving device in the cell, wherein the antenna cluster corresponds to the subband, and the antenna cluster transmits data only over the corresponding subband; and

the receiving unit comprises:

a receiving module, configured to receive the channel information of the subband transmitted by the receiving device; and

a determining module, configured to determine the cluster identifier of the antenna cluster corresponding to the channel information according to the subband corresponding to the channel information.

**25.** A distributed antenna system, comprising:

a receiving device, an antenna, and a central processing device that are located in the same cell, wherein all antennas in the cell are divided into at least one antenna cluster, and each antenna cluster comprises at least one antenna and has a corresponding cluster identifier;

the receiving device is configured to receive a measurement reference signal corresponding to an antenna cluster in the cell, obtain channel information corresponding to the antenna cluster according to the measurement reference signal, and transmit the cluster identifier and the channel information corresponding to the antenna cluster to the central processing device; and

the central processing device is configured to transmit the measurement reference signal corresponding to an antenna cluster to the receiving device in the cell, receive the cluster identifier and the channel information corresponding to the antenna cluster transmitted by the receiving device, and determine the antenna cluster serving the receiving device according to the cluster identifier and the channel information corresponding to the antenna cluster.

Receive, by a receiving device, a measurement reference signal corresponding to an antenna cluster in a cell ~101

Obtain channel information corresponding to the antenna cluster according to the measurement reference signal ~102

Transmit the cluster identifier and the channel information corresponding to the antenna cluster to a central processing device ~103

FIG. 1

Cell A

Antenna cluster 1

Antenna cluster 4

Antenna cluster 3

Antenna cluster 2

FIG. 2

Cell A

Antenna cluster 1
Antenna cluster 4

Antenna cluster 2
Antenna cluster 3

FIG. 3

Cell A

Antenna 2 of antenna cluster 4

Antenna 2 of antenna cluster 3

Antenna 2 of antenna cluster 2

Antenna 2 of antenna cluster 1

Antenna 1 of antenna cluster 4

Antenna 1 of antenna cluster 3

Antenna 1 of antenna cluster 2

Antenna 1 of antenna cluster 1

FIG. 4

Cell A

Antenna 1
Antenna 2

Antenna cluster 1

Antenna 3
Antenna 4

Antenna cluster 2

FIG. 5

Subband

Antenna cluster 1

Antenna cluster 2

Antenna cluster 3

Antenna cluster 4

FIG. 6

Transmit, by a central processing device, a measurement reference signal corresponding to an antenna cluster to a receiving device in a cell ⌐201

Receive the cluster identifier and the channel information corresponding to the antenna cluster transmitted by the receiving device ⌐202

Determine the antenna cluster serving the receiving device according to the cluster identifier and the channel information corresponding to the antenna cluster ⌐203

FIG. 7

Receiving unit ⌐10

Measurement unit ⌐11

Transmitting unit ⌐12

80

FIG. 8

FIG. 9

FIG. 10

**1100**

Transmitting unit — 20

Receiving module — 21
210

Determining module — 211

Determining unit — 22

FIG. 11

Central processing device — 7

Antenna — 6

Receiving device — 5

**1200**

FIG. 12

FIG. 13

FIG. 14

# INTERNATIONAL SEARCH REPORT

| International application No. |
| --- |
| **PCT/CN2011/080366** |

**A. CLASSIFICATION OF SUBJECT MATTER**

H04B 7/04 (2006.01) i

According to International Patent Classification (IPC) or to both national classification and IPC

**B. FIELDS SEARCHED**

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNABS, CNTXT, CNKI: antenna, distribution, confirm, choose, select, DAS, receive, user, terminal, mobile station, MS, UE, centre, handle, control, apparatus, device, base station, BS, CU, channel, cluster, unit, identification, ID

VEN, IEEE, 3GPP: distributed, antenna, central, unit, CU, DAS, RAU, receive, reception, UE, MS, cluster, group, channel, choose, choice, select, ID

**C. DOCUMENTS CONSIDERED TO BE RELEVANT**

| Category* | Citation of document, with indication, where appropriate, of the relevant passages | Relevant to claim No. |
| --- | --- | --- |
| Y | CN 101321007 A (SOUTHEAST UNIVERSITY), 10 December 2008 (10.12.2008), description, page 2, lines 13-28, page 3, lines 7-8 and 17-18, and figures 1 and 2 | 1-2, 5-11, 13-15, 18-22, 24-25 |
| Y | CN 101873157 A (SOUTHEAST UNIVERSITY), 27 October 2010 (27.10.2010), description, paragraphs 0005 and 0010-0011 | 1-2, 5-11, 13-15, 18-22, 24-25 |
| Y | CN 101610135 A (DATANG MOBILE COMMUNICATIONS EQUIPMENT CO., LTD.), 23 December 2009 (23.12.2009), description, page 3, line 19 to page 4, line 25, page 7, lines 7-12, and page 8, lines 4-12, and figures 2, 4 and 7 | 1-2, 5-11, 13-15, 18-22, 24-25 |
| Y | CN 101388698 A (ZTE CORP.), 18 March 2009 (18.03.2009), description, page 2, lines 6-14, and figures 2 and 3 | 1-2, 5-11, 13-15, 18-22, 24-25 |
| A | KR 20060121621 A (SOLID TECHNOLOGIES INC.), 29 November 2006 (29.11.2006), the whole document | 1-25 |

☐ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 December 2011 (14.12.2011) | **12 January 2012 (12.01.2012)** |

| Name and mailing address of the ISA/CN: | Authorized officer |
| --- | --- |
| State Intellectual Property Office of the P. R. China No. 6, Xitucheng Road, Jimenqiao Haidian District, Beijing 100088, China Fax No.: (86-10) 62019451 | **WANG, Tingting** Telephone No.: (86-10) **62412161** |

Form PCT/ISA/210 (second sheet) (July 2009)

## INTERNATIONAL SEARCH REPORT
Information on patent family members

| | International application No. |
|---|---|
| | **PCT/CN2011/080366** |

| Patent Documents referred in the Report | Publication Date | Patent Family | Publication Date |
|---|---|---|---|
| CN 101321007 A | 10.12.2008 | None | |
| CN 101873157 A | 27.10.2010 | None | |
| CN 101610135 A | 23.12.2009 | WO 2009152695 A1 | 23.12.2009 |
| | | KR 20110018452 A | 23.02.2011 |
| | | IN 201100417 P4 | 11.11.2011 |
| CN 101388698 A | 18.03.2009 | None | |
| KR 20060121621 A | 29.11.2006 | KR 100690329 B1 | 09.03.2007 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010593602